# EUROPEAN PATENT APPLICATION

(11) **EP 4 811 708 A1**
(43) Date of publication of application: **23.09.2026**
(21) Application number: 25165350.7
(22) Date of filing: 21.03.2025
(51) Int. Cl.: H04L 5/00

(54) **METHODS, APPARATUS ,AND COMPUTER PROGRAMS FOR QUASI-COLOCATED SIGNALS**

(71) Applicant: Nokia Technologies Oy, 02610 Espoo (FI)
(72) Inventor: BARBU, Oana-Elena, 9220 Aalborg (DK); IZYDORCZYK, Tomasz, 55-120 Osolin (PL); REZAIE, Sajad, 9220 Aalborg (DK)
(74) Representative: Page White Farrer

(57) **Abstract**

An apparatus comprising: means for receiving a first quasi co-location configuration associated with a first signal and a second signal, the first quasi co-location configuration comprising information about a first quasi co-location type; means for determining that a different quasi co-location type is to be requested; and means for requesting, in response to determining that a different quasi co-location type is to be requested, a different quasi co-location type be used for a future transmission of two or more signals.

## Description

### FIELD

The present application relates to methods, apparatus, and computer programs, and particular but not exclusively to methods, apparatus and computer programs relating to quasi-colocated signals.

### BACKGROUND

A communication network can be seen as a facility that enables communications between two or more communication devices or provides communication devices access to a data network. A mobile or wireless communication network is one example of a communication network. A communication device may be provided with a service by an application server.

Such communication networks operate in according with standards such as those provided by 3GPP (Third Generation Partnership Project) or ETSI (European Telecommunications Standards Institute). Examples of standards include the so-called 5G (5th Generation) standards and 6G (6th Generation) standards promulgated by 3GPP.

### SUMMARY

Accordingly to an aspect there is provided a method comprising: receiving a quasi colocation configuration associated with a first signal and a second signal, the quasi co-location configuration providing information about a set of one or more resource elements for which the quasi co-location configuration applies; means for receiving the first and second signals; and using the quasi co-location configuration to process one or more of the first and second signals.

The method may comprise using the quasi co-location configuration to process one or more of the first and second signals is for performing channel estimation.

The method may comprise using the quasi co-location configuration to process one or more of the first and second signals is for performing channel state indictor estimation.

The method may comprise using the quasi co-location configuration to process one or more of the first and second signals is for decoding one or more of the first and second signals.

According to a second aspect, there is provide method comprising: determining a quasi co-location configuration associated with a first signal and a second signal, the quasi co-location configuration providing information about a set of one or more resource elements for which the quasi co-location configuration applies; and providing the quasi co-location configuration to a user equipment which is to receive the first and second signals.

According to a third aspect, there is provided method comprising: receiving a first quasi co-location configuration associated with a first signal and a second signal, the first quasi co-location configuration comprising information about a first quasi co-location type; determining that a different quasi co-location type is to be requested; and requesting, in response to determining that a different quasi co-location type is to be requested, a different quasi co-location type be used for a future transmission of two or more signals.

The two or more signals may comprise one or more of the first and second signals.

The method may comprise receiving a second quasi co-location configuration for the two or more signals, the second quasi co-location configuration comprising information about the different quasi co-location type, and receiving the two or more signals.

The method may comprise processing one or more of the first and second signals, based on the first quasi co-location type and processing one or more of the two or more signals based on the different quasi co-location type.

The processing may comprise one or more of: performing channel estimation; performing channel state indictor estimation; decoding one or more of the first signal, the second signal, one or more further signals transmitted with one or more of the first and second signals, one or more of the two or more signals, or one or more further signals transmitted with one or more of the two or more signals,

The method may comprise determining the different quasi co-location type which is to be requested, and requesting the determined different type be used for the future transmission of the one or more of the two or more signals.

The method may comprise determining that one or more of the first and second signals is associated with a first error rate which is above a first threshold, and in response to determining that the first error rate is above the first threshold, determining that the different quasi co-location type is to be requested.

The method may comprise determining that one or more of the first and second signals is associated with a channel estimation error rate which is above a second threshold, and in response to determining that the channel estimation error rate is above the second threshold, determining that the different quasi co-location type is to be requested.

The method may comprise determining a second error rate at an output of a low density parity check decoder is above a third threshold, and in response to determining that the second error rate is above the third threshold, determining that the different quasi co-location type is to be requested.

The method may comprise determining that one or more of the first and second signals is associated with a bit reconstruction error rate which is above a fourth threshold, and in response to determining that the bit reconstruction error rate is above the fourth threshold, determining that the different quasi co-location type is to be requested.

The method may comprise: determining a first channel estimate by estimating a channel associated with one or more of the first and second signals using the first quasi co-location type; determining a second channel estimate by estimating a channel associated with one or more of the first and second signals without using the first quasi co-location type; and determining based on the first channel estimate and the second channel estimate that the different quasi co-location type is to be requested.

According to a fourth aspect there is provided a method comprising: determining a first quasi co-location configuration associated with a first signal and a second signal, the first quasi co-location configuration comprising information about a first quasi co-location type; providing the first quasi co-location configuration to a user equipment which is to receive the first and second signals; receiving a request from the user equipment for a different quasi co-location type to be used for a future transmission of two or more signals; and providing a different quasi co-location configuration to the user equipment which is to receive the two or more signals.

One or more of the following features may be used with the method of the third aspect or the fourth aspect.

The first and second signals may be at least partially superimposed.

A third signal may at least partially be superimposed with one of the first signal and the second signal.

The first quasi co-location configuration may provide information about a set of one or more resource elements for which the first quasi co-location configuration applies.

According to a fifth aspect, there is provide a method comprising: receiving a quasi co-location configuration associated with a first signal and a second signal, the quasi co-location configuration providing information about a set of one or more resource elements for which the quasi co-location configuration applies; receiving the first and second signals; and receiving at a channel estimator the first signal, the second signal, and a quasi co-location type indicating a quasi co-location type per resource element between the first and second signals, and for outputting a channel response.

The channel estimator may comprise an artificial intelligence and/or machine learning channel estimator.

One or more of the first and second signals may be at least partially superimposed with a downlink data channel and the channel estimator is for estimating the downlink data channel.

The channel estimator may be for receiving a vector of the quasi co-location type to indicate the quasi co-location type per resource element between the first and second signals.

A quantized value may be used to indicate the quasi co-location type for a respective resource element.

The channel estimator may provide one or more of a channel estimate and an estimate of a channel state indicator.

One or more of the following features may be used in conjunction with one or more of the first to fifth aspects.

The first signal and the second signal may be at least partially superimposed.

The quasi co-location configuration may provide information about the set of one or more resource elements which are at least partially shared between the first and second signal for which the quasi co-location configuration applies.

One or more of the first and second signals may be at least partially superimposed with a respective third signal.

The third signal comprises a physical downlink channel. For example, the physical downlink channel may be a data channel. For example, the physical downlink channel may be a shared channel or a dedicated channel.

The set of one or more resource elements may comprise: a subset of resource elements of a slot; a set of resource elements provided in two or more slots; or a set of resource elements for a transmission opportunity.

A first quasi co-location configuration may be provided for the first signal and the second signal, and a second quasi co-location configuration may be provided for the first signal and a fourth signal, the first and second quasi co-location configuration being associated with different parts of a slot.

One or more of the first signal and the second signal may be a reference signal.

The reference signal may comprise a channel state indictor reference signal, a phase tracking reference signal, a positioning reference signal, a synchronization signal/ physical broadcast channel block, or a demodulation reference signal.

The third signal may comprise a physical downlink shared channel transmission.

The first signal may comprise a channel state indictor reference signal and the second signal comprises a demodulation reference signal.

One of the first and second signal may be a target signal for the quasi co-location configuration, and the other of the first and second signal may be a source signal for the quasi co-location configuration.

One of the first signal and the second signal may be transmitted on fewer resource elements than the other of the first and second signals.

The quasi co-location configuration may comprise information about one or more of the first and second signals.

The quasi co-location configuration may comprise information about one or more quasi co-location types.

The quasi co-location configuration may comprise information about a duration for which the quasi co-location configuration applies.

Any one or more of the methods may be performed by an apparatus.

The methods of the first, third and fifth aspects may be performed by an apparatus provided in a user equipment or being a user equipment.

The methods of the second and fourth aspects may be performed by an apparatus provided in a user equipment or being a network access node.

The apparatus may comprise one or more means for performing a respective method.

The apparatus may comprise at least one processor; and at least one memory storing instructions that, when executed by the at least one processor, cause the apparatus at least to perform the respective method.

According to another aspect, there is provided a computer readable medium comprising program instructions stored thereon for performing at least one of the above methods.

According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the claims.

### DESCRIPTION OF FIGURES

Embodiments will now be described, by way of example only, with reference to the accompanying Figures in which:
Fig. 1 shows a representation of a network system according to some example embodiments;
Fig. 2 shows an example of an apparatus according to some embodiments;
Fig. 3 illustrates quasi co-location QCL relationship between a source reference signal and a target reference signal;
Fig. 4 illustrates example signalling;
Fig. 5 schematically illustrates channel estimation of some embodiments;
Fig. 6 shows a first method;
Fig. 7 shows a second method;
Fig. 8 shows a third method;
Fig. 9 shows a fourth method; and
Fig. 10 shows a fifth method.

### DETAILED DESCRIPTION

The following describes an example communication environment and example apparatus in which the presently described techniques may be deployed. It is understood that this is not limiting.

The following embodiments are provided by way of non-limiting and illustrative example. Although this disclosure may refer to "an", "one", or "some" embodiment(s) in several locations if the text herein, this does not necessarily mean that each reference is made to the same embodiment(s), or that a particular feature only applies to a single embodiment. Single features (or respective portion(s) thereof) of different embodiments may also be combined to provide other embodiments. Further, when a particular feature, structure, or characteristic is described in connection with an embodiment, it intended such feature, structure, or characteristic may be applied in connection with other embodiments (whether or not explicitly described).

It shall be understood that although the terms "first," "second" and the like may be used herein to describe various elements, these elements should not be limited by these terms. These terms are merely used to distinguish one element from another.

As used herein, the phrases "at least one of A or B", "at least one of A and B", and "A and/or B" means (A), (B), or (A and B). Analogously, the phrase "A, B, and/or C" means (A), (B), (C), (A and B), (A and C), (B and C), or (A, B, and C).

As used herein, the term "or" refers to a non-exclusive "or" unless otherwise indicated (e.g., use of "or else" or "or in the alternative").

As used herein and unless stated explicitly, performing a respective feature, step, or functionality "in response to A" does not indicate that the respective feature, step, or functionality is performed immediately after "A" occurs as one or more intervening features, steps, or functionalities may be performed (at least in part) between an occurrence of the respective feature, step, or function and "A". Analogously, performing a respective feature, step, or functionality "based on A" does not indicate that the respective feature, step, or functionality is performed solely based on "A" as the respective feature, step, or functionality may be further based on one or more other features, steps, or functionalities in addition to "A".

Embodiments described herein may be implemented in a communication network, such as any of the following radio access technologies (RATs): Worldwide Interoperability for Micro-wave Access (WiMAX), Global System for Mobile communications (GSM, 2G), GSM EDGE radio access Network (GERAN), General Packet Radio Service (GPRS), Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE), 5G (also called NR), 6G, or beyond. Moreover, communication within the communication network may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), and/or Discrete Fourier Transform spread OFDM (DFT-s-OFDM).

As used herein, reference to a user equipment (UE) is to be understood to be a reference to any suitable terminal device.

The term "terminal device" refers to any end device that may be capable of wireless communication. By way of non-limiting and illustrative example, a terminal device may be referred to as a communication device, a UE, a Subscriber Station (SS), or a Mobile Station (MS). The terminal device may include a mobile phone, a cellular phone, a smart phone, voice over IP (VoIP) phones, wireless local loop phones a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, USB dongles, an Internet of Things (IoT) device, a watch or other wearable, smart glasses. goggles, smart headsets, smart earphones, smart necklaces, smart earrings, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and/or the like.

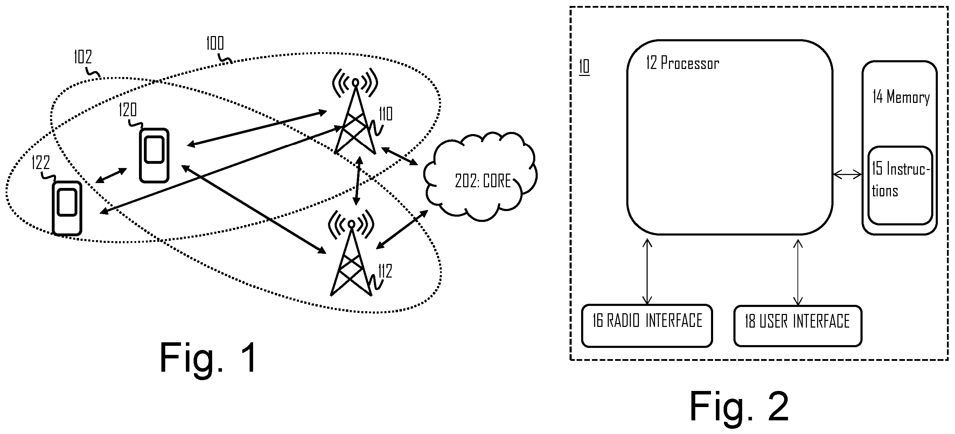

Fig. 1 illustrates an example of a communication network to which examples disclosed herein may be applied. The communication network or a cellular communication network may comprise a network access node 110 configured to provide one or more cells, such as cell 100, and a network access node 112 configured to provide one or more other cells, such as cell 102. Each cell may be, e.g., a macro cell, a micro cell, femto, or a pico cell, for example. The cell may define a coverage area or a service area of the corresponding node.

The network access node 110 may provide a user equipment (UE) 120 (one or more UEs) with wireless access to the communication network. The wireless access may comprise downlink (DL) communication from the network access node to the UE 120 and uplink (UL) communication from the UE 120 to the network node. Examples of uplink channels comprise physical uplink control channel (PUCCH) for transmitting control information and physical uplink shared channel (PUSCH) for transmitting data towards the network. Examples of downlink channels comprise physical downlink control channel (PDCCH) for transmitting control information and physical downlink shared channel (PDSCH) for trans-mitting data towards the user equipment. Links are also referred to herein as "channels".

There may be a plurality of UEs 120, 122 in the system. Each of the plurality of UEs 120, 122 may be served by the same or by different network access nodes 110, 112.

The network access nodes 110 and 112 may be further connected via another interface to a core network 202 of the communication network.

As used herein, the term "network access node" refers to a node in a communication network via which a terminal device accesses the network and receives services therefrom. The network access node may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

Signals transmitted between the UE and the network access node may experience channel effects, The signals may be affected by the wireless channel response. Channel estimation is used to estimate the channel between the UE and network access node. For example, the network access node will transmit reference signals to the UE. The UE will use these reference signals to estimate the channel between the UE and the network access node.

Some examples of channel effects are discussed below.
- **Doppler** Shift: Doppler shift is a shift in the frequency of the radio signal relative to motion of the receiver. For example, when a network access node transmits a radio signal of a frequency "X", this may be received at a UE with a frequency of "Y" when the UE is traveling away from or travelling to the network access node.
- **Doppler Spread:** Doppler Spread relates to a broadening of a frequency spectrum of a narrow-band signal transmitted through a multipath propagation channel. Doppler spread occurs as a result of the different Doppler shift frequencies associated with the multiple propagation paths when there is relative motion between the transmitter and the receiver.
- **Average Delay:** When signal is transmitted from multiple antenna, it reaches a receiver through multiple path reflect from surrounding clutter. This is known as multi-path transmissions. In multi-path scenarios, the average time taken to receive all the multi-path components at the receiver is known as Average Delay.
- **Delay Spread:** Delay spread refers to the difference between the time of arrival of the earliest significant multi path component (which may comprise a line of sight (LOS) component) and the time of arrival of the last multi path component.
- **Spatial Receiver Parameter:** Spatial Receiver Parameter refers to Beam Forming properties of Downlink received signal, such as, for example dominant Angle of Arrival, average Angle of Arrival at UE.

There exist situations in which at least one of the channel conditions experienced by one signal is similar to at least one of the channel conditions experienced by another signal. In such a situation, the network access node and/or UE may exploit this similarity when determining parameters for transmission and/or reception by grouping together "similar" signals and causing at least some common set of transmission parameters and/or reception parameters to be used within that group of signals. This grouping together of signals for such a purpose is sometimes referred to as quasi-colocation (QCL).

Various combinations of these channel conditions have been grouped together to form various quasi-co-location QCL types. For example, QCL-TypeA refers to QCL that comprises doppler shift, doppler spread, average delay and delay spread, QCL-TypeB refers to QCL that comprises doppler shift and doppler spread, QCL-TypeC refers to QCL that comprises average delay and doppler shift, and QCL-TypeD refers to QCL that comprises a spatial parameter. Of course, there may be further and/or alternative QCL types.

These QCL types indicate how similar the channel conditions for two different signals are, and the QCL types are used by the UE to improve the detection of the signal of interest e.g. the UE may combine the two signals to better estimate the channel response for the data associated with one of the QCL-ed signals.

In the following examples, two or more signals may be at least partially superimposed.

Two or more signals may be provided on one or more resource elements which are at least partially shared by the two or more signals.

One or more of the two or more signals may be a reference signal. In some embodiments, two or more of the signals may be a reference signal. A reference signal may sometimes be referred to as a pilot signal. However, in this document, the term "reference signal" will be used.

In some embodiments, where the two signals are reference signals, one or more further signals may be at least partially superimposed with one of the two reference signals. In some embodiments, each of the reference signals may be at least partially superimposed with one or more respective further signal.

The signals which are at least partially superimposed may be transmitted using one or more of the same resource element.

A resource element may be regarded as a time-frequency resource over one subcarrier of a single OFDM symbol.

One or more transmitting antennas may be the same or different for the two or more signals.

One or more receiving antennas may be the same or different for the two or more signals.

A reference signal may be a channel state indictor reference signal (CSI RS), a phase tracking reference signal (PT-RS), a positioning reference signal (PRS), a demodulation reference signal (DMRS), a synchronisation signal/ physical broadcast channel (SS/PBCH),block or any other reference signal.

A CSI RS is a downlink reference signal that is used by a UE for measuring various radio channel quality metrics (e.g., reference signal receive power (RSRP), reference signal receive quality (RSRQ), signal to interference and noise ratio (SINR), etc.).

The DRMS or PDSCH-DMRS is used for the decoding the PDSCH.

In some embodiments, two reference signals may be regarded as being at least partially superimposed. For example, the two reference signals may be provided, at least partially on shared resource elements.

In one example, the DMRS is at least partially superimposed with PDSCH data, and with one or more RS signals, for example CSI RS. The UE may use both of the two reference signals for the channel estimation. This may thus improve the quality of the PDSCH reception. It should be appreciated that whilst the following examples superimpose CSI RS and DMRS, different combinations of reference signals may be used in different examples.

It should be appreciated that in some of the examples, one of the reference signals may be superimposed with data of the PDSCH channel. It should be appreciated that some embodiments may be used with one or more other downlink channels.

Combining the two superimposed RS (e.g. DMRS and CSI RS) may be based on how similar the channel and interference conditions of the two signals are. Otherwise, instead of coherent combining of the two superimposed reference signals, the UE would perform the coherent combining blindly with mixed results.

To achieve coherent combining the UE may take into account one or more of the following:
the source of the two signals i.e. the spatial correlation of the two signals:
the bandwidths of the signals;
the duration and periodicity of the signals;
the time and frequency densities of the signals; and/or
the channels' selectivity in time and frequency domains, of the two signals.

Some embodiments may provide a framework or configuration for assisting the UE in combining the superimposed RS of different types (e.g. DMRS with CSI RS) for a DL channel, for example, PDSCH, reception. In some embodiments a QCL configuration is used for associating different parts of the superimposed signals.

For example, QCL type and signal for sets of superimposed reference signal resource elements (RE) may be provided when configuring the DL channel transmission and the corresponding reference signal. The QCL type and signal may be configured on a per resource element RE set basis. A set of REs may comprise a subset of resource elements of a slot. A set of REs may comprise a plurality of REs of two or more slots. A set of REs may comprise a set of REs for a transmission opportunity.

The QCL configuration used for associating different parts of the superimposed reference signals may improve the DL channel estimation and subsequent data reception quality. In this case, a QCL type and signal for sets of RE for superimposed reference signals SI RS may be provided when configuring the DL transmission and the corresponding SI RS transmission.

In some embodiments, a different QCL may be associated with different parts or positions of the reference signals within a same slot.

In some examples, the QCL type and signal may change from one DL transmission to the other e.g. in one transmission, the different RE sets of SI RS may be QCL-ed with one reference signal and, while in a following transmission may be QCL-ed with another DL reference signal.

In case the QCL type is unsatisfactory, the UE may request from the base station, for example gNB, a different QCL scheme and/or signal change for a future (re)transmission. For example, the UE may request a different QCL scheme for a future DL channel transmission opportunity.

The QCL configuration of some embodiments may assist in the acquisition of a DL reference signal. In this case, a QCL type and signal for the different RE sets of DL RS may be provided when (re-)configuring the RS feedback.

Some embodiments may provide a QCL validity window. This may define the period of time for which the QCL configuration is valid.

The network access node may configure a QCL validity window value W which is used to define the period for which the signalled QCL configuration remains valid. The validity time window may be expressed by a time, for example seconds, a number of symbols, a number of slots, and/or the like.

In some embodiments, as long as the reception of the relevant channel, e.g. PDSCH/PDCCH, happens no later than the W+R, where R is the time when the QCL configuration was received, then the QCL relationship can be used.

In other embodiments, as long as the reception of the relevant channels happens no later than the W, then the QCL relationship can be used. In this example the validity window value effectively accounts for the time at which the QCL configuration is received.

In some embodiments, the value of W may be provided by one or more information elements. For example, the value of W may be conveyed by an IE. The IE may provide a duration for SI QCL.

In some embodiments, information about a QCL type is provided for a SI DMRS. In some examples, a QCL type and signal for sets of SI DMRS resource elements (RE) may be provided when configuring the PDSCH transmission and the corresponding DMRS. Some embodiments may provide a RE-set-specific QCL for SI DMRS. Different QCL types may be associated with different parts (positions) of SI DMRS within the same slot.

This may be used to improve the PDSCH/PDCCH channel estimation and subsequent data reception quality. The QCL type for the SI DMRS may be provided when configuring the PDSCH transmission and the corresponding SI DMRS pattern.

For example, the SI DMRS configuration or reconfiguration may provide a QCL type for a set of one or more resource elements. The SI DMRS configuration or reconfiguration may indicate the RE for which the QCL type may be provided.

The SI DMRS configuration or reconfiguration may provide information about one or more of a SI DMRS type, and SI DMRS position.

The PDSCH configuration may provide one or more of the following information:
SI-DMRS type;
SI-DMRS position;
QCL source RS and position (this is the reference signal that is superimposed with the SI-DMRS), e.g. SI CSI RS index K; and/or
QCL-type: e.g. type B.

It should be appreciated that in some embodiments, the QCL configuration may be provided as part of the relevant channel configuration, which in this example is the PDSCH. In other embodiments, the QCL configuration may be separately provided.

In some embodiments, a given instance of the SI DMRS may be QCL-ed with one or more signals. The one or more other signals may be one or more other SI DMRS ports and/or other superimposed reference signals.

For example, SI DMRS position X may be QCL-ed:
Type A with SI DMRS position X-1;
Type B with SI DMRS position X-K;
Type A with SI DMRS port Y;
Type A with SI CSI RS index U.

The validity window W may depend on one or more of the following:
the duration of the SI DMRS; and/or
the numerology (yielding the symbol duration).

The SI DMRS QCL configuration may be
SI DMRS position 1, RE elements {a, b, c} {QCL type x, QCL source signal m}
SI DMRS position 2, RE elements {d, e, f} {QCL type y, QCL source signal n}
Time duration of validity window for SI QCL {value}

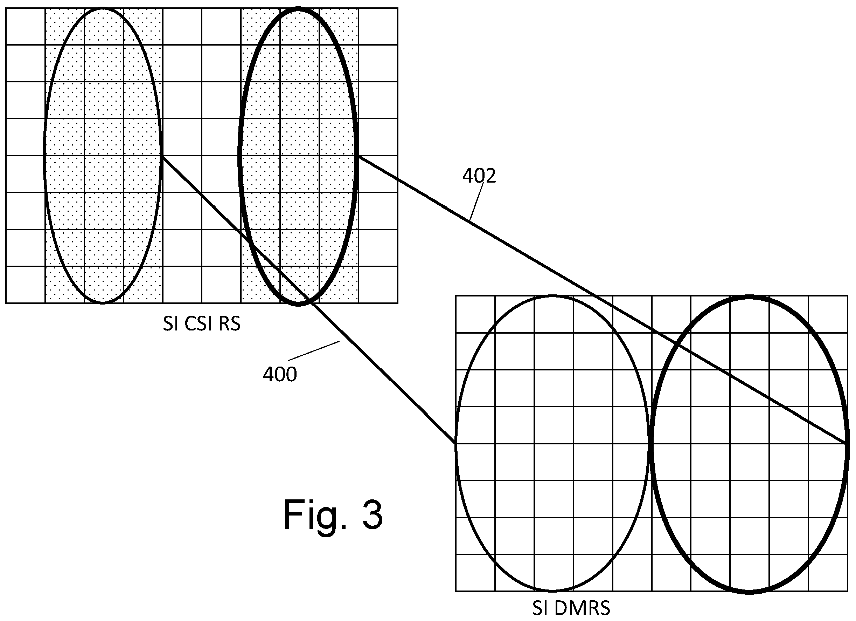

Note that, since SI DMRS transmission may occupy the full PDSCH slot, i.e. all RE are occupied by both data and DMRS, then the QCL may be configured at the symbol level, instead of the SI DMRS instance level, i.e. different sets of SI DMRS RE may be QCL-ed with different sets of other reference signals as shown in Fig. 3. In Fig. 3, there is a first QCL relationship, referenced 400 for a first set of the SIP DMRS with a first SI CSI RS. There is a second QCL relationship, referenced 402 for a second set of the SIP DMRS with a second SI CSI RS. In this example the SI DMRS occupies a full slot.

In some embodiments, the QCL configuration may assist in the acquisition of the DL CSI acquisition. The configuration may define a RE-set-specific QCL for SI CSI RS.

To assist the DL CSI acquisition, a QCL type for the SI CSI RS may be provided when (re)configuring the CSI feedback type.

For example, a SI CSI RS resource configuration may configure the one or more QCL types for the SI CSI RS on a RE set basis. The SI CSI RS resource configuration may provide a QCL configuration. The SI CSI RS resource configuration may comprise one or more of the following:
A resource identity of the SI CSI RS;
A QCL type, e.g. type C; and/or
A QCL source RS and position (this is the reference signal that is superimposed with the SI CSI RS, e.g. SI DMRS index v).

If the SI CSI RS overlies two or more downlink channels, e.g. PDSCH/PDCCH (potentially of two or more UEs), then the same SI CSI RS signal may be QCL-ed with two or more DMRS and SI-DMRS. For example, different sets of REs of SI CSI RS may be QCL-ed with different sources:

### SI CSI RS QCL

SI CSI RS index, RE elements {a, b, c} {QCL type x, QCL source signal m}
SI CSI RS index, RE elements {d, e, f} {QCL type y, QCL source signal n}
A validity time window may be provided, as previously described.

In addition or in the alternative, SI CSI RS port X can be QCL-ed with SSBs for obtaining RSRP measurement information and for supporting beam forming. This may be useful with frequency ranges such as FR2 (above 24GHz), upper-mid band or FR3 (7GHz to 24 GHz), and/or other frequency ranges.

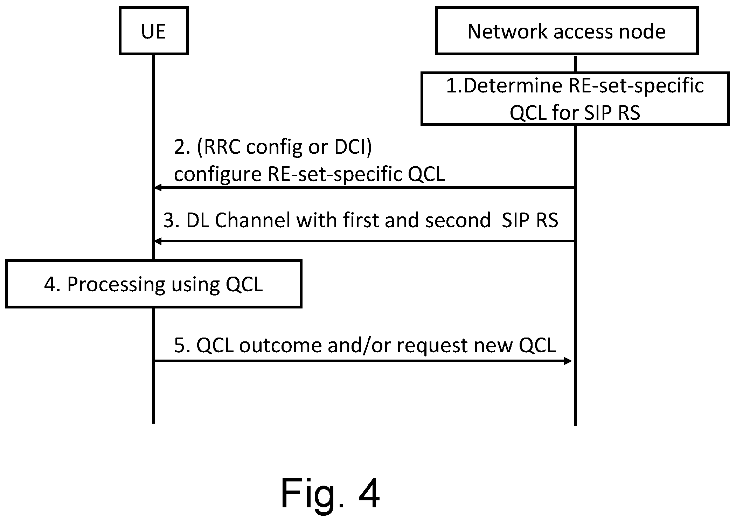

Reference is made to Fig. 4 which shows a signal flow of some embodiments.

As referenced 1, the network access node my determine the QCL type for a set of one or more resource elements. This determination will be for a first reference signal and will define the position of that first refence signal to which the QCL type applies. The position will define the one or more resource elements. The determination will also define a second reference signal. The index(es) of the second reference signal will be determined. The first reference signal may be regarded as a target signal and the second reference signal may be regards as a source signal.

In one example, the first reference signal is a DMRS and the second reference signal is a SI CSI RS as discussed above. The network access node may determine a SI DMRS pattern which includes the one or more REs assigned to the SI DMRS. The network access node may determine which SI DMRS RE are QCL-ed with another signal and define the QCL type and signal at a RE set level. The time duration for which the QCL information applies may be defined.

For example, a QCL configuration such as defined below may be determined:
SI DMRS QCL
SI DMRS position 1, RE elements {a, b, c} {QCL type x, QCL source signal m}
SI DMRS position 2, RE elements {d, e, f} {QCL type y, QCL source signal n}
Time Duration (e.g. validity window information) for SI QCL {value}

In another example, the first reference signal may be the SI CSI RS, and the second signal may be the DMRS, again as previously discussed. For example, a QCL configuration such as defined below may be determined:
SI CSI RS index, RE elements {a, b, c} {QCL type x, QCL source signal m}
SI CSI RS index, RE elements {d, e, f} {QCL type y, QCL source signal n}
Time Duration (e.g. validity window information) for SI QCL {value}

As referenced by 2, the network access node will provide this QCL configuration, which is at the RE level to the UE. The QCL configuration may be provided in a configuration or a reconfiguration message. The QCL configuration may be provided in a radio resource control (RRC) message. The QCL configuration may be provided as part of downlink control information (DCI).

As referenced by 3, the network access node transmits a downlink channel with the first and second superimposed reference signals. For example, the PDSCH is transmitted with the DMRS and the CIS-RS.

As referenced by 4, the UE applies the QCL configuration for processing of one or more of the first reference signal, the second reference signal, and the DL channel. This processing may be as discussed later.

Optionally, the UE may evaluate the outcome of using the indicated QCL.

Optionally, as referenced by 5, the UE may provide feedback to the network access node on the outcome of using the indicated QCL or request a different QCL scheme This is described in more detail later. The different QCL scheme may for example be for the next transmission opportunity of the downlink channel.

The UE may use the RE-set-specific QCL relationship and the source and target RS signals in a channel estimator and/or receiver to enhance the channel estimation accuracy. The channel estimator is for estimating the channel associated with one or more of the SI reference signals. For example, the channel estimator is for estimating the PDSCH and/or PDCCH

The channel estimator may be an artificial intelligence and/or machine learning channel estimator which is referred to as an AI/ML channel estimator in the following. For example, the AI/ML channel estimator may be implemented by one or more of a deep neural network, a convolutional neural network CNN, a residual network ResNet, and/or the like.

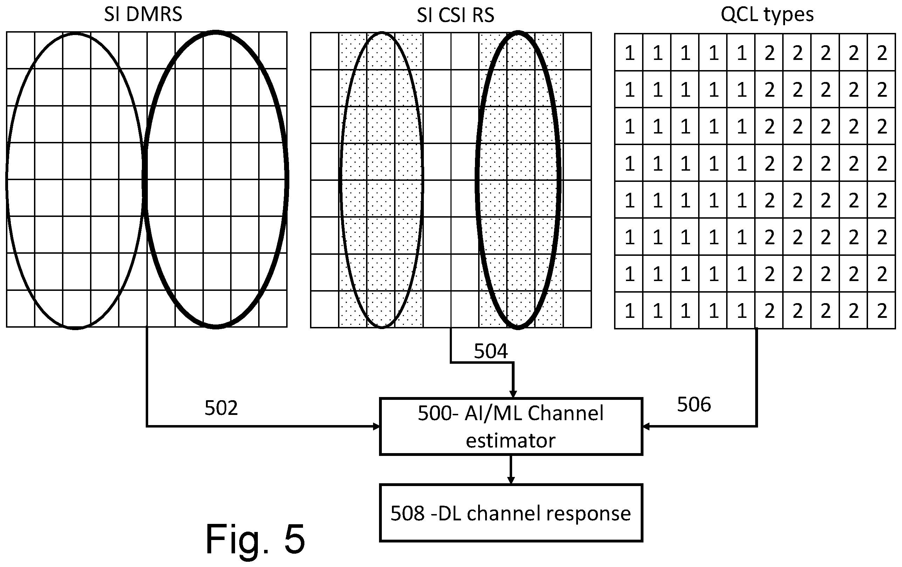

Reference is made to Fig. 5 which schematically shows a AI/ML channel estimator 500. The AI/ML channel estimator receives as a first input 502, a first SI reference signal which is a target signal for the respective QCL type. In the example of Fig. 5, the first signal is the SI DMRS but in other embodiments may be a different SI RS, for example the SI CSI RS.

The AI/ML channel estimator receives as a second input 504, a second SI reference signal which is a source signal for the respective QCL type. In the example of Fig. 5, the second signal is the SI CSI RS but in other embodiments may be a different SI RS, for example the SI DMRS.

The AI/ML channel estimator receives as a third input 504, the QCL type information associated with the first and second reference signals for the respective REs. For example, the QCL type information may be provided as a vector of QCL types indicating the type per RE between the target and the source signals. A QCL type may be indicated for each RE, for example.

The QCL types may be quantized for example as follows:

| QCL Type | Quantized value |
|---|---|
| A | 1 |
| B | 2 |
| C | 3 |
| D | 4 |

The channel estimator may output, as referenced 508, the channel response for the DL channel. The DL channel may be, for example, the PDSCH.

The channel estimator may provide channel estimation and/or CSI estimation.

The QCL configuration may thus be used for estimating the channel. The estimate of the channel facilitates the subsequent data decoding for the data of the DL channel.

CSI-RS may be used for channel estimation purposes. The network access node may transmit a CSI-RS for all the CSI-RS ports. Then, channel estimator 500 of the UE estimates the DL channel using the received signal. The UE may follow Type-I codebook, Type-II codebooks, or an AI/ML-based encoder to compress the estimated channel and share the compressed CSI with the network access node in CSI-feedback. Then, the network access node processes the received/compressed CSI and determines an appropriate precoding.

The AI/ML channel estimator may be trained using a loss function.

The loss function may be provided by a channel estimation error. This channel estimation error may be any suitable error. For example, the channel estimation error may be a mean squared error, and/or the like.

Alternatively, or additionally the loss function may be provided by a bit reconstruction error. The bit reconstruction error may be provided by binary cross entropy, and/or the like.

The UE may use the channel estimator to determine if the QCL was a correct QCL type. Alternatively, or additionally the UE may use one or more other receiver blocks to determine if the QCL was a correct QCL type. The one or more other receiver blocks may comprise one or more of a demapper and/or a decoder.

In some embodiments, the UE may run a QCL type check by determining if an error rate, for example a block error rate BLER, for the received DL channel, e.g. PDSCH is above a defined threshold. If the error rate is above the threshold, this would indicate that a different QCL type may provide a better result.

In some embodiments, the UE may run a QCL type check by determining if the bit reconstruction error rate, for the received DL channel, e.g. PDSCH is above a defined threshold. If the error rate is above the threshold, this would indicate that a different QCL type may provide a better result.

In some embodiments, the UE may perform two or more of channel estimation, equalization, demodulation, and decoding to provide an output. The UE may determine an error rate associated with the output, for example, at the output of a low-density parity check code LDPC decoder. If the error rate is larger than a value the UE expects for a current signal to interference noise ratio SINR. If the error is consistently low for a defined number of consecutive subframes, then the UE may request a QCL change.

In some embodiments, the UE may run a QCL type check by estimating the channel with the QCL type information and without the QCL type information. For example, the UE would estimate the channel with combining of the SI DMRS with SI CSI RS and without combining of the SI DMRS with SI CSI RS. The UE would then assess whether the doppler and/or delay spreads are similar or not between the two channel estimates. A similarity would indicate a correct QCL type. If the doppler and/or delay spreads are not similar, this would indicate that a different QCL type may provide a better result.

In some embodiments, the UE may run a QCL type check by estimating two or more of the CSI- RS channel without the QCL type information, the DMRS channel without the QCL type information, and the DMRS channel with the QCL information. The UE would then assess whether the doppler and/or delay spreads are similar or not between the two or more channel estimates. A similarity would indicate a correct QCL type. If the doppler and/or delay spreads are not similar, this would indicate that a different QCL type may provide a better result.

In some embodiments, when the UE determines that QCL type is not appropriate or that a different QCL type ma provide a better result, the UE may send a request to the network access node that a different QCL type be used. Optionally, at least some the information that has been determined by the UE to make the determination that a current QCL type is unsatisfactory may be send to the network access node. Optionally, the UE may determine a QCL type which the UE considers would be more satisfactory and the UE may request that this QCL type be applied in a future transmission.

In the example embodiments described previously, the reference signals have been transmitted in the DL. Other embodiments may be used at the network access node. In that case, the one or more reference signals may be transmitted by the UE and the data may be transmitted on an UL channel.

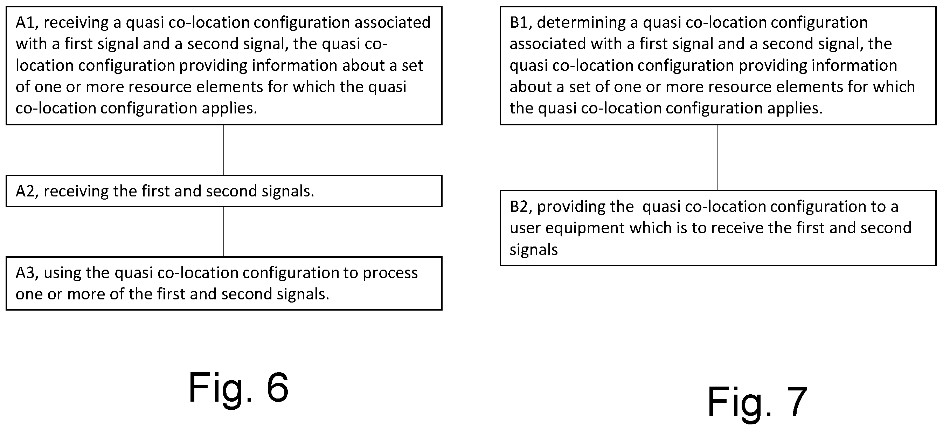

Reference is made to Figs. 6 to 10 which show some methods of some embodiments.

Each method may be performed by an apparatus. The apparatus may comprise suitable means, such as circuitry for providing the respective method. Additionally or alternatively, the apparatus may comprise at least one processor and at least one memory storing instructions that, when executed by the at least one processor cause the apparatus at least to provide the respective method. Additionally or alternatively, the apparatus may be such as discussed in relation to Fig. 2. The respective methods may be provided by computer program code or computer executable instructions.

The methods of Figures 6, 8, and 10 may be performed by an apparatus. The apparatus may be a user equipment or may be provided in a user equipment.

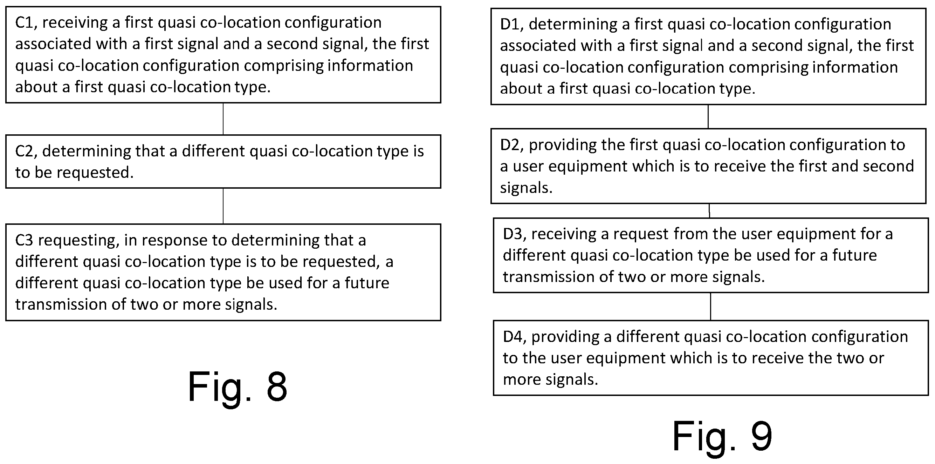

The methods of Figures 7, and 9 may be performed by an apparatus. The apparatus may be a radio access node or may be provided in a radio access node.

Reference is made to Fig. 6.

As referenced by A1, the method comprises receiving a quasi co-location configuration associated with a first signal and a second signal, , the quasi co-location configuration providing information about a set of one or more resource elements for which the quasi co-location configuration applies.

As referenced by A2, the method comprises receiving the first and second signals.

As referenced by A3, the method comprises using the quasi co-location configuration to process one or more of the first and second signals.

Reference is made to Fig.7.

The method may comprise as referenced by B1, determining a quasi co-location configuration associated with a first signal and a second signal, the quasi co-location configuration providing information about a set of one or more resource elements for which the quasi co-location configuration applies.

The method may comprise as referenced by B2, providing the quasi co-location configuration to a user equipment which is to receive the first and second signals.

Reference is made to Fig.8.

The method may comprise as referenced by C1, receiving a first quasi co-location configuration associated with a first signal and a second signal, the first quasi co-location configuration comprising information about a first quasi co-location type.

The method may comprise as referenced by C2, determining that a different quasi co-location type is to be requested.

The method may comprise as referenced by C3 requesting, in response to determining that a different quasi co-location type is to be requested, a different quasi co-location type be used for a future transmission of two or more signals.

Reference is made to Fig.9.

The method may comprise as referenced by D1, determining a first quasi co-location configuration associated with a first signal and a second signal, the first quasi co-location configuration comprising information about a first quasi co-location type.

The method may comprise as referenced by D2, providing the first quasi co-location configuration to a user equipment which is to receive the first and second signals.

The method may comprise as referenced by D3, receiving a request from the user equipment for a different quasi co-location type to be used for a future transmission of two or more signals.

The method may comprise as referenced by D4, providing a different quasi co-location configuration to the user equipment which is to receive the two or more signals.

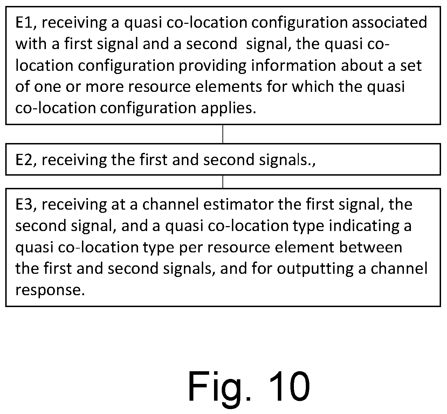

Reference is made to Fig. 10.

The method may comprise as referenced by E1, receiving a quasi co-location configuration associated with a first signal and a second signal, the quasi co-location configuration providing information about a set of one or more resource elements for which the quasi co-location configuration applies.

The method may comprise as referenced by E2, receiving the first and second signals.

The method may comprise as referenced by E3, receiving at a channel estimator the first signal, the second signal, and a quasi co-location type indicating a quasi co-location type per resource element between the first and second signals, and for outputting a channel response.

It should be appreciated that any of the methods described in relation to Figs. 6 to 10 may be modified to include one or more of the features (or respective portion(s) thereof) discussed in relation to the previous examples.

Although the apparatuses have been described as one entity, different modules and memory may be implemented in one or more physical or logical entities.

It is noted that whilst some embodiments have been described in relation to 5G and 6G networks and beyond, similar principles can be applied in relation to other networks and communication systems. Therefore, although certain embodiments were described above, by way of non-limiting and illustrative example, with reference to certain example architectures for wireless networks, technologies and standards, embodiments may be applied to any other suitable forms of communication systems than those illustrated and described herein.

It is also noted herein that while the above describes embodiments, there are several variations and modifications which may be made herein without departing from the scope of this disclosure.

Fig. 2 shows, by way of non-limiting and illustrative example, a block diagram of an apparatus 10. The apparatus 10 comprises, for example, at least one processor 12 and at least one memory 14 storing instructions 15 that, when executed by the at least one processor, cause the apparatus 10 at least to perform the method or methods (or portion(s) there-of) as disclosed herein, and any of the embodiments (or respective portion(s) thereof). In an example, the at least one memory and the instructions, are configured, with the at least one processor, to cause the apparatus 10 to perform the method or methods (or portion(s) thereof) as disclosed herein, and any of the embodiments (or respective portion(s) thereof).

A processor 12 may comprise circuitry, or be constituted as circuitry or circuitries, the circuitry or circuitries being configured to perform phases of methods in accordance with embodiments described herein.

As used herein, the term "circuitry" may refer to one or more or all of the following: (a) hardware-only circuit implementations, such as implementations in analog, digital and/or quantum circuitry, and (b) combinations of hardware circuit(s) and software, such as (as applicable): (i) a combination of analog, digital and/or quantum hardware circuit(s) with software/firmware and (ii) any or all portions of hardware processor(s) (including digital and/or quantum processor(s)) with software, and memory(ies) that work together to cause an apparatus, such as a mobile device, user equipment, computing device, or server, to perform various functions) and (c) any or all portions of hardware circuit(s), such as a microprocessor(s), processor(s) and/or quantum processor(s), that require software (e.g., firmware) for operation, but the soft-ware may not be present when it is not needed for operation. This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example, and if applicable to the particular claim element, a baseband integrated circuit or processor integrated circuit for a mobile device or a similar integrated circuit in server, a cellular network device, or other computing or network device.

The memory 14 may be implemented using any suitable data storage technology. The memory may comprise a database for storing data. The memory 14 may, for example, be at least in part external to apparatus 10 but accessible to apparatus 10.

The instructions 15 may be comprised in a computer readable medium or a non-transitory computer readable medium. A term non-transitory, as used herein, is a limitation of the medium itself (i.e. tangible, not a signal) as opposed to a limitation on data storage persistency (e.g. random-access memory, RAM, vs. read only memory, ROM).

For example, the apparatus 10 may be implemented as a UE, comprise a UE or be provided in a UE. The apparatus may comprise a chipset, The apparatus 10 may be caused or configured to perform at least the method of Fig. 6, 8 or 10 and/or any one or more of the embodiments described herein.

For example, the apparatus 10 may be implemented as a network access node, comprise a network access node, or be provided in a network access node. The apparatus may comprise a chipset, The apparatus 10 may be caused or configured to perform at least the method of Figs. 7 or 9 and/or any one or more of the embodiments described herein.

The apparatus 10 optionally comprises a radio interface 16. The radio interface 16 may provide the apparatus 10 with communication capabilities. The radio interface 16 may comprise a receiver configured to receive information in accordance with at least one cellular or non-cellular standard. The radio interface 16 may comprise a transmitter configured to transmit information in accordance with at least one cellular or non-cellular standard. The receiver may comprise more than one receiver. The transmitter may comprise more than one transmitter. The radio interface 16 may comprise a transceiver configured to receive and transmit information in accordance with at least one cellular or non-cellular standard. The transceiver may comprise more than one transceiver.

The apparatus 10 may optionally comprise an interface 18 (e.g., user interface) comprising, for example, at least one of a keypad, a microphone, a touch display, a display, a speaker, etc. The interface 18 (e.g., user interface) may be used to control the apparatus by the user. The interface 18 (e.g., user interface) may be external to the apparatus 10. For example, the apparatus 10 may be connected to another device, such as a computer, either via wireless or wired connection, and the apparatus 10 is controlled via the computer.

In an embodiment, at least some of the processes described herein may be carried out by an apparatus comprising means for carrying out at least some of the described processes. Means for performing method steps as disclosed herein may include software and/or hardware components of the apparatus 10. For example, the at least one processor 12, the memory 14, and the computer program code form means for carrying out the method or methods (or portion(s) thereof) as disclosed herein, and any of the embodiments (or respective portion(s) thereof).

As used herein the term "means" is to be construed in singular form, i.e. referring to a single element, or in plural form, i.e. referring to a combination of single elements. Therefore, terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C.

Even though various embodiments of this disclosure have been described above with reference to non-limiting and illustrative examples of the Figures, it is clear that the scope of this disclosure is not restricted thereto - but can be modified in many different ways. As technology advances, it will become apparent to a person skilled in art as to how certain embodiments of this disclosure can be further implemented and/or modified in various ways. Further, it is clear to a person skilled in the art that any of the embodiments (or portion(s) thereof) described herein may, but are not required to, be combined in various ways with any other embodiments (or portion(s) thereof) described herein.

## Claims

1. An apparatus comprising:
means for receiving a first quasi co-location configuration associated with a first signal and a second signal, the first quasi co-location configuration comprising information about a first quasi co-location type;
means for determining that a different quasi co-location type is to be requested; and
means for requesting, in response to determining that a different quasi co-location type is to be requested, a different quasi co-location type be used for a future transmission of two or more signals.

2. The apparatus as claimed in claim 1, wherein the two or more signals comprise one or more of the first and second signals.

3. The apparatus as claimed in claim 1 or 2, comprising means for receiving a second quasi co-location configuration for the two or more signals, the second quasi co-location configuration comprising information about the different quasi co-location type, and means for receiving the two or more signals.

4. The apparatus as claimed in any preceding claim, comprising means for processing one or more of the first and second signals, based on the first quasi co-location type and means for processing one or more of the two or more signals based on the different quasi co-location type.

5. The apparatus as claimed in claim 4, wherein the means for processing is for one or more of: performing channel estimation; performing channel state indictor estimation; decoding one or more of the first signal, the second signal, one or more further signals transmitted with one or more of the first and second signals, one or more of the two or more signals, or one or more further signals transmitted with one or more of the two or more signals,

6. The apparatus as claimed in any preceding claim, wherein the means for determining is further for determining the different quasi co-location type which is to be requested, and said means for requesting is further for requesting the determined different type be used for the future transmission of the one or more of the two or more signals.

7. The apparatus as claimed in any preceding claim, wherein the means for determining that a different quasi co-location type is to be requested is for determining that one or more of the first and second signals is associated with a first error rate which is above a first threshold, and in response to determining that the first error rate is above the first threshold, determining that the different quasi co-location type is to be requested.

8. The apparatus as claimed in any preceding claim, wherein the means for determining that a different quasi co-location type is to be requested is for determining that one or more of the first and second signals is associated with a channel estimation error rate which is above a second threshold, and in response to determining that the channel estimation error rate is above the second threshold, determining that the different quasi co-location type is to be requested.

9. The apparatus as claimed in any preceding claim, comprising a low density parity check decoder, wherein the means for determining that a different quasi co-location type is to be requested is for determining a second error rate at an output of the low density parity check decoder is above a third threshold, and in response to determining that the second error rate is above the third threshold, determining that the different quasi co-location type is to be requested.

10. The apparatus as claimed in any preceding claim, wherein the means for determining that a different quasi co-location type is to be requested is for determining that one or more of the first and second signals is associated with a bit reconstruction error rate which is above a fourth threshold, and in response to determining that the bit reconstruction error rate is above the fourth threshold, determining that the different quasi co-location type is to be requested.

11. The apparatus as claimed in any preceding claim, wherein the means for determining that a different quasi co-location type is to be requested is for:
determining a first channel estimate by estimating a channel associated with one or more of the first and second signals using the first quasi co-location type;
determining a second channel estimate by estimating a channel associated with one or more of the first and second signals without using the first quasi co-location type; and
determining based on the first channel estimate and the second channel estimate that the different quasi co-location type is to be requested.

12. The apparatus as claimed in any preceding claim, wherein the first and second signals are at least partially superimposed, a third signal being at least partially superimposed with one of the first signal and the second signal, the first quasi co-location configuration providing information about a set of one or more resource elements for which the first quasi co-location configuration applies.

13. A method comprising:
receiving a first quasi co-location configuration associated with a first signal and a second signal, the first quasi co-location configuration comprising information about a first quasi co-location type;
determining that a different quasi co-location type is to be requested; and
requesting, in response to determining that a different quasi co-location type is to be requested, a different quasi co-location type be used for a future transmission of two or more signals.

14. An apparatus comprising:
means for determining a first quasi co-location configuration associated with a first signal and a second signal, the first quasi co-location configuration comprising information about a first quasi co-location type;
means for providing the first quasi co-location configuration to a user equipment which is to receive the first and second signals;
means for receiving a request from the user equipment for a different quasi co-location type to be used for a future transmission of two or more signals; and
means for providing a different quasi co-location configuration to the user equipment which is to receive the two or more signals.

15. A method comprising:
determining a first quasi co-location configuration associated with a first signal and a second signal, the first quasi co-location configuration comprising information about a first quasi co-location type;
providing the first quasi co-location configuration to a user equipment which is to receive the first and second signals;
receiving a request from the user equipment for a different quasi co-location type to be used for a future transmission of two or more signals; and
providing a different quasi co-location configuration to the user equipment which is to receive the two or more signals.
